# EUROPEAN PATENT APPLICATION

(11) **EP 4 521 177 A1**
(43) Date of publication of application: **12.03.2025**
(21) Application number: 23196211.9
(22) Date of filing: 08.09.2023
(51) Int. Cl.: G05B 19/402, B23K 9/20, G05B 19/42

(54) **DEVICE FOR JOINING AND JOINING METHOD WITH A DETECTION DEVICE FOR ALIGNING A JOINING HEAD**

(71) Applicant: Newfrey LLC, New Britain, CT 06053 (US)
(72) Inventor: REIS, Christian, 35394 Gießen (DE)
(74) Representative: SBD IPAdmin

(57) **Abstract**

Joining method and joining device comprising a joining head having:
- a retaining device (16) by which the joining element can be moved along a joining axis toward the workpiece for joining the joining element to on a workpiece surface,
- a supporting device (18) adapted to contact against the workpiece,
- detection device (28) for determining the relative orientation of the joining axis with regard to the workpiece surface,
- a control device (42) which is set up to control the orientation of the joining axis, wherein the detection device is arranged on the supporting device and automatically correct the orientation of the joining axis (x) with regard to the workpiece surface.

## Description

The present invention relates to a device and a method for aligning a joining head which is used to carry out a joining process on a workpiece. More particularly, the present invention may be implemented in the field of stud welding or drawn arc welding or drawn arc ignition welding. However, the device and the method can be implemented also in other processes such as riveting, adhesive bonding, blind fastening, plasma pinning or the like adapted to set a joining element on or in a workpiece arrangement.

In drawn arc welding, a joining element is held using a welding tool with a welding head and placed on a workpiece. By forming a circuit, a current flows between the welding head and the workpiece through the joining element. To ignite an arc, the joining element is lifted slightly from the workpiece using the welding tool. The resulting arc melts the workpiece and/or the joining element. To end the process, the joining element is lowered onto the workpiece and pressed into the melt. The electricity is switched off and the melt cools.

Other joining process using similar joining tools and joining heads can also be implemented, such as mentioned above.

During such joining processes, it is important that the joining tool is correctly aligned with respect to the workpiece to carry out the joining process.

With manual joining tools, it is possible to provide separate guide devices or the like for this purpose. In this case, however, the guide devices must first be aligned correctly in order to then be able to use them to guide the joining tool well.

In industrial manufacturing plants, it is preferred to guide the joining tool automatically, for example using a robot.

For manufacturing processes using robots, it is common practice to teach the robot. In such case, certain positions, such as a starting position of the joining tool for carrying out a joining process, are defined in advance. The joining tool is usually brought into this position, and the position is then saved in a control device of the robot.

It is known for manufacturing processes to manually align the joining device with the joining head in the starting position. This usually works quite well if, for example, a starting position for a joining process is vertically above a large workpiece surface (e.g. a body panel). Such an alignment process is more difficult if the joining process is to be carried out on a curved surface of a workpiece.

Misalignments can mean that the joining processes subsequently carried out with the robot only lead to a lower quality of the joint.

To overcome those drawbacks, several systems have been developed.

For instance, DE102011010438A1 from the applicant, is based on the idea of fixing an alignment device on a joining tool instead of manually aligning a joining tool and placing a support surface of the alignment device on a surface of a workpiece, whereby the alignment device can be used to check whether the joining tool is correctly aligned in relation to the surface of the workpiece.

JPH05376A discloses a stud welding apparatus used for welding a stud component to a workpiece comprising a correction device having a pair of laser sensors attached to both sides of ta stud gun. A laser beam is emitted from the laser sensors so that the distance to the object that the laser beam strikes can be measured, and the measurement result is fed back to the control circuit. By feeding back to a control circuit, the amount of rotation of servo motors can be corrected and controlled in accordance with the feedback signal.

US2013015163A1 is directed to a stud welding gun comprising devices for detecting, displaying and controlling the orientation of the stud welding gun.

DE102018208872 discloses a method for drawn ignition welding, in which a welding part is welded onto a component surface using a welding tool. The welding part is moved along a joining axis of the welding tool relative to the component, and before the start of welding, the alignment of the joining axis of the welding tool relative to the component surface is determined by means of a detection device. Then, the welding tool is positioned such that the joining axis is aligned perpendicular to the component surface.

The fixation of a further device on the joining tool to determine the alignment of the tool implies an increase in weight and space requirement of the joining tool. Besides, misalignment may still occur depending on the accuracy of the alignment device and its arrangement on the device. It is therefore an object of the present invention to provide a joining device comprising a position detection unit adapted to provide continuous and accurate values without increasing the space requirement of the joining device and with an automatic position correction to ensure that the joining axis of the joining device is always correct with regard to the workpiece surface. It is also an object of the present disclosure to provide a joining method providing an automated fine adjustment of the joining axis by means of a teach-in (or learning) process.

Accordingly, the present invention provides a joining device according to claim 1 and a joining method according to claim 9. More particularly, the device for joining, in particular arc welding, a joining element, preferably a stud, to a workpiece comprises a joining head having:
- a retaining device by which the joining element can be moved along a joining axis toward the workpiece for joining the joining element to on a workpiece surface,
- a supporting device (18) adapted to contact against the workpiece,
- a detection device for determining the relative orientation of the joining axis with regard to the workpiece surface,
- a control device which is set up to control the orientation of the joining axis,
wherein the detection device is arranged on the supporting device (18)and the control device automatically corrects the orientation of the joining axis with regard to the workpiece surface.

Such joining device with an orientation detection device is adapted for continuously ensuring the correct position or orientation of the joining head with regard to the workpiece surface. The system detects the position of the joining head and the joining axis relative to the workpiece surface and corrects said position or orientation if necessary, before the welding process actually begins. Welding errors are thus avoided. The integration of the detection device within the supporting device and therefore in the vicinity of the joining point on the workpiece increases the accuracy of the detection without increasing the space requirements. No manual intervention of an operator is necessary and the joining axis orientation is automatically corrected in case of deviation.

In an embodiment, the supporting device comprises a main body having an opening adapted to receive the joining element and a supporting surface adapted to face the workpiece, and wherein the detection device is arranged on or in the vicinity of the supporting surface.

In an embodiment, the detection device forms at least in part the supporting surface.

In an embodiment, the detection device comprises a sensor mounting ring movably mounted on the main body, the sensor mounting ring comprising a surface adapted to contact the workpiece.

The detection device is thus adapted to be in direct contact with the workpiece surface and does not protrude from the joining device.

In an embodiment, the detection device comprises a compression ring arranged between the sensor mounting ring and the main body. The compression ring allows tolerance adjustment.

In an embodiment, the sensor mounting ring is connected to the mouthpiece through an anti-rotation device. Thus, the sensor mounting ring is not rotatably movable around the joining axis. A spacer cooperating with a groove can be used to connect the sensor mounting ring to the mouthpiece.

In an embodiment, the detection device comprises MEMs sensors for position measurement and the control device interacts with the MEMs sensors for calculating the orientation of the joining axis. MEMS sensors are small in size and possess extremely high sensitivity. Thus, the mouthpiece remains compact, and the detection device is accurate.

In an embodiment, the MEMs sensors are fixed to the sensor mounting ring. Thus, the MEMs sensors measurement of the joining axis orientation with regard to the workpiece surface is accurate.

The present invention is also directed to a joining method, in particular a method for drawn arc ignition welding, in which a joining element, preferably a stud, is joined on a workpiece surface using a device comprising the steps of:
- providing a workpiece with a workpiece surface adapted to receive a joining element;
- providing a device for joining as described above;
- determining the alignment of the joining axis relative to the workpiece surface by means of the detection device;
- automatically positioning the joining head such that the joining axis is aligned perpendicular to the workpiece surface;
- joining the joining element on the workpiece.

The joining method allows an exact alignment of the joining axis in relation to the workpiece. The teach-in (or computer implemented learning) processes can be simplified and accelerated, since the operator no longer has to adjust manually the joining axis position and orientation.

In an embodiment, the control device records the orientation values of the joining head before the joining step and automatically corrects the orientation of the joining head during the joining step.

In an embodiment, several joining steps are performed after the recording of the orientation values. Once set up, the system can work automatically and takes any deviation into account during the joining process.

The invention and its advantages will be better understood from the reading of the following description, given by way of example only and with reference to the accompanying drawings, of which:
Fig. 1 schematically shows a perspective view of a joining device according to the invention with a joining head, a retaining device, a supporting device, a detection device and a control device;
Fig. 2 schematically shows the supporting device of the joining device of Fig. 1 with the integrated detection device;
Fig. 3 schematically shows the possible steps of a joining method according to the invention.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

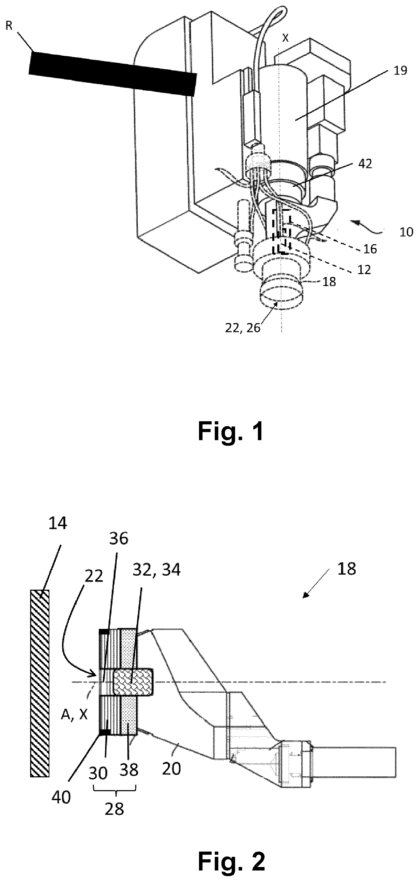

Fig. 1 shows a joining device 10 adapted for joining a fastener or joining element 12 to a workpiece 14. The joining element 12 is for instance a stud with a shaft and an enlarged flange, the flange being destined to be fastened to the workpiece 14. The joining device 10, as shown in Fig. 1 is more particularly an arc stud welding device. However, in other embodiments, the joining element may be a rivet, a blind fastener, a glue stud, a pin or the like. The joining device is a riveting device, a blind fastener setting device, an adhesive bonding device, a plasma joining device and the like.

The joining device 10 in a well-known manner comprises a retaining device 16 adapted to retain the joining element 12 which is intended to be connected to the workpiece 14. The joining element 12 is moved along a joining axis of the joining device 10 relative to the workpiece. Via the retaining device 16, there is optionally also supplied an electrical connection current which is used for the stud welding operation.

In a conventional stud welding process, the joining element 12 first is placed on a joining surface of a workpiece (also called workpiece surface). Subsequently, a reduced electric current in the form of a pilot current is switched on. After that, the joining element 12 is raised from the workpiece surface so that an arc is drawn. Then, the electric current is increased to a welding current which may be greater than 1000 ampere. The mutually opposed faces of the joining element 12 and the workpiece thereby melt. Subsequently, the joining element 12 is lowered onto the workpiece 14, preferably as far as a location below the workpiece surface so that the electric current is short-circuited and switched off. Subsequently, the overall melt hardens so that a materially engaging connection is achieved between the joining element 12 and the workpiece 14. In order to carry out this joining process, which is generally known, the retaining device 16 can be axially moved along a longitudinal axis A which forms the joining axis, in order to axially raise and lower the joining element 12 along a joining axis with respect to the workpiece 14. The stud welding process will not be further described here, as those skilled in the art understand and appreciate how stud welding process and arc stud welding devices operate.

The joining device 10 comprises a joining head with supporting device 18 adapted to contact against the workpiece. The supporting device comprises a main body 20 and a supporting surface adapted to contact the surface of a workpiece. The main body has an opening adapted to receive the joining element. The supporting surface id adapted to face and contact the workpiece. Thus, the supporting device 18, during the joining process, is in the vicinity of the joining area wherein the joining element is fixed. The supporting device is thus arranged at a front end of the joining head and in such a manner that the retaining device 16 can carry out relative movements with regard to the workpiece 14.The supporting device 18 is fixed to a housing 19 of the joining device 10.

As seen in Fig. 2 , the supporting device 18 has a base member or main body 20 partially defining the axial opening 22 extending along the longitudinal axis A. The retaining device 16 with a joining element 12 can be received inside the opening 22. In a particular embodiment, the supporting device is a protective gas mouthpiece 18 adapted to contact against the workpiece to enclose the joining element within a sealed chamber containing protective joining gas during the joining process. The opening 22 defines a cleaning space 26 in which the protective gas can be introduced and which, when the joining process is carried out, is axially delimited by the workpiece which covers the opening 22. Protective gas can be supplied to the cleaning space 26 to displace ambient gas, such as air, from the cleaning space 26 in order to improve the above-described stud welding process. However, the supporting device may also be a structure attached at the front end of the joining head and adapted to be moved in the vicinity of the joint for improving the joining process or at least without negatively interfering with the joining process. For instance, in some welding process with some material, like steel, a mouthpiece may not be necessary, contrary to aluminium welding processes.

The longitudinal axis A is often aligned with the joining axis of the joining element 12.

The joining device 10 further comprises a detection device 28 for determining the relative orientation of the joining axis X with regard to the workpiece surface. The detection device 28, as better seen in Fig. 2, is arranged on the supporting device 18 , which could be a mouthpiece 18. More particularly, the detection device 28 forms a mouth of the supporting device adapted to contact the workpiece18. The detection device 28 is arranged around the opening 22. The detection device 28 comprises a sensor mounting ring 30 movably mounted on the supporting device 18. More particularly the sensor mounting ring 30 is connected to the base member 20 of the supporting device through an anti-rotation device 32. The anti-rotation device 32 comprises a spacer 34 which is arranged in a groove 36 formed in the base member 20 and the sensor mounting ring 30. The spacer 34 is fixedly connected to the base member 20 and can translate within the portion of the groove formed in the sensor mounting ring 30. A compression ring 38 may be arranged between the sensor mounting ring 30 and the base member 20. For instance, the compression ring 38 also comprises a groove which is in the continuity of the groove formed in the sensor mounting ring 30 and base member 20. MEMS sensors 40 are arranged on the sensor mounting ring 30 in order to detect and measure the position and movements of the sensor mounting ring. The MEMs sensors are for instance fixed to the outer lateral part of the sensor mounting ring 30. The MEMs sensors 40 interact directly with a control device 42 fixed on the housing 19 of the joining head. The control device 42 stores and processes the values sent by the MEMs sensors 40 in order to determine the exact orientation of the joining axis X with regard to the workpiece, as described below. Once the exact orientation of the joining axis X with regard to the workpiece is detected, it can be corrected so that the joining axis X is aligned perpendicular to the workpiece surface. The control device 42 interacts directly with a robot arm 44 supporting the joining head or a displacement unit controlling the position of the joining head such that the position of the joining head is automatically corrected such that the joining axis X remains orthogonal to the workpiece surface.

More particularly, the joining method with the alignment function works as follows.

First of all, the joining head of the joining device 10 is directed toward the workpiece 14 until the detection device 28 contacts the workpiece 14. More particularly, the joining head is directed toward the workpiece surface until the sensor mounting ring contacts the workpiece. If the joining axis X is already orthogonal to the workpiece surface, then the sensor mounting ring 30 contacts the workpiece and the compression on the compression ring is similar in all point of the compression ring. If there is a misalignment between the joining axis X and the normal to the workpiece surface, the compression on the compression ring will not be regular and an angle will appear. The MEMs sensor can record the difference or angle. The values recorded by the MEMs sensors 40 are sent to the control device 42 which can detect a misalignment between the joining axis X and the normal to the workpiece surface and correct it in real-time such that the orientation of the joining head is automatically corrected. For instance, a robot slightly rotates the joining head such that the joining axis is orthogonal to the workpiece. Once the correction has been done, the correct positioning values of the joining head are recorded for the welding process. The joining head is then automatically aligned perpendicular to the workpiece surface and the joining element 12 can be joined on the workpiece surface.

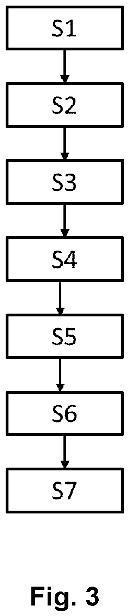

Fig. 3 schematically shows the possible joining steps of the joining method. In a first step (S1), the joining device 10 is moved by a robot arm to the joining position. In a second step (S2), the joining head is moved (for instance by a carriage) along the joining axis up to the workpiece surface such that the detection device (and more particularly the sensor mounting ring) contacts the workpiece surface. In a third step (S3), the detection device 28 (and more particularly the sensor mounting ring) is adjusted on the workpiece surface. In a fourth step (S4), a pilot current is switched on. In a fifth step (S5), the values measured by the detection device (and more particularly the MEMs sensors) are interpreted such that the angle between the joining axis and the axis perpendicular to the workpiece surface is measured, for instance by the control device or a micro-controller. The angle correction is calculated and a robot arm corrects the position of the joining head such that the joining axis becomes perpendicular to the workpiece surface. In a sixth step (S6), the pilot current is switched off. In the last step (S7), the joining process is completed.
joining device 10
joining element 12
workpiece 14
retaining device 16
supporting device or protective gas mouthpiece 18
housing 19
base member 20
axial opening 22
cleaning space 26
detection device 28
joining axis X
sensor mounting ring 30
anti-rotation device 32
spacer 34
groove 36
compression ring 38
MEMS sensors 40
control device 42

## Claims

1. Device (10) for joining, in particular arc welding, a joining element, preferably a stud, to a workpiece comprising a joining head having:
- a retaining device (16) by which the joining element can be moved along a joining axis toward the workpiece for joining the joining element to on a workpiece surface,
- a supporting device (18) adapted to contact against the workpiece, ,
- detection device (28) for determining the relative orientation of the joining axis with regard to the workpiece surface,
- a control device (42) which is set up to control the orientation of the joining axis, **Characterized in that** the detection device is arranged on the supporting device (18) and automatically correct the orientation of the joining axis (x) with regard to the workpiece surface.

2. Device (10) according to claim 1, wherein the supporting device (16) comprises a main body (20) having an opening (22) adapted to receive the joining element and a supporting surface adapted to face the workpiece, and wherein the detection device (28) is arranged on or in the vicinity of the supporting surface.

3. Device (10) according to claim 2, wherein the detection device (28) forms in part the supporting surface.

4. Device (10) according to any of claims 1 to 3, wherein the detection device (28) comprises a sensor mounting ring (30) movably mounted on the main body (20), the sensor mounting ring comprising a surface adapted to contact the workpiece.

5. Device (10) according to claim 4, wherein the detection device (28) comprises a compression ring (38) arranged between the sensor mounting ring and the main body.

6. Device according to claim 4 or 5, wherein the sensor mounting ring is connected to the main body (20) through an anti-rotation device (32).

7. Device (10) according to any of claims 1 to 6, wherein the detection device (28) comprises MEMs sensors for position measurement and the control device interacts with the MEMs sensors for calculating the orientation of the joining axis.

8. Device (10) according to claims 4 and 7, wherein the MEMs sensors (40) are fixed to the sensor mounting ring (30).

9. Device (10) according to any of claims 1 to 7, wherein the supporting device is a protective gas mouthpiece (18) adapted to contact against the workpiece to enclose the joining element within a sealed chamber containing protective joining gas during the joining process.

10. Joining method, in particular method for drawn arc ignition welding, in which a joining element, preferably a stud, is joined on a workpiece surface using a device comprising the steps of:
- providing a workpiece (14) with a workpiece surface adapted to receive a joining element;
- providing a device (10) for joining according to any of claims 1 to 8,
- determining the alignment of the joining axis of the device relative to the workpiece surface by means of the detection device,
- automatically positioning the joining head such that the joining axis is aligned perpendicular to the workpiece surface,
- joining the joining element on the workpiece.

11. Joining method according to claim 9, wherein the control device (42) records the orientation values of the joining head before the joining step and automatically corrects the orientation of the joining head during the joining step.

12. Joining method according to claim 10, wherein several joining steps are performed after the recording of the orientation values.
